(19) Europäisches Patentamt
European Patent Office
Office européen des brevets

(11) Veröffentlichungsnummer: **0 464 485 A1**

(12) # EUROPÄISCHE PATENTANMELDUNG

(21) Anmeldenummer: **91110139.2**

(51) Int. Cl.5: **C09D 4/00**, C08J 7/04

(22) Anmeldetag: **20.06.91**

(30) Priorität: **03.07.90 DE 4021109**

(43) Veröffentlichungstag der Anmeldung:
**08.01.92 Patentblatt 92/02**

(84) Benannte Vertragsstaaten:
**DE FR GB IT**

(71) Anmelder: **BAYER AG**

**W-5090 Leverkusen 1 Bayerwerk(DE)**

(72) Erfinder: **Brandt, Heinz Dieter, Dr.**
**Buschstrasse 169**
**W-4150 Krefeld(DE)**
Erfinder: **Fischer, Wolfgang, Dr.**
**Eschendonk 6**
**W-4005 Meerbusch 3(DE)**
Erfinder: **Leuschke, Christian, Dipl.-Ing.**
**Neckarstrasse 36**
**W-4047 Dormagen(DE)**
Erfinder: **Kranz, Gerhard**
**Edelratherweg 155**
**W-5090 Leverkusen(DE)**

(54) **UV-härtbare Beschichtungen für Polycarbonat-Formkörper.**

(57) Gegenstand der vorliegenden Erfindung sind UV-härtbare Mischungen, ihre Verwendung zum Beschichten von Formkörpern aus thermoplastischen Polycarbonaten, ein Verfahren zum Beschichten von Formkörpern aus thermoplastischen Polycarbonaten und mit den UV-härtbaren Mischungen beschichtete und ausgehärtete Polycarbonatformkörper.

EP 0 464 485 A1

Gegenstand der vorliegenden Erfindung sind UV-härtbare Mischungen, die dadurch gekennzeichnet sind, daß sie

A) 5-90 Gew.-%, bezogen auf die Gewichtssumme von 100 Gew.-% aus A( + B) + C) an Umsetzungsprodukt von Hydroxyalkylacrylaten mit aliphatischen Polyisocyanaten, die wenigstens 2 Isocyanatgruppen und wenigstens eine Uretdion- und/oder Triisocyanat- und/oder Biuretgruppe pro Molekül enthalten,

B) 5-90 Gew.-%, bezogen auf die Gewichtssumme von 100 Gew.-% A) + B) + C) an tri- oder tetra- oder penta- oder hexafunkitonelle (Meth)acrylaten mit einem Molekulargewicht unter 600,

C) 5-90 Gew.-%, bezogen auf die Gewichtssumme von 100 Gew.-% aus A) + B) + C) eines Lösungsmittels bzw. eines geeigneten Gemisches, gängiger Lösungsmittel,

D) 0,1-10 Gew.-%, bezogen auf die Gewichtssumme von 100 Gew.-% A) + B) + C), Photoinitiatoren und

E) 0,01-3 Gew.-%, bezogen auf die Gewichtssumme von 100 Gew.-% A) + B) + C), Lackadditive

enthalten.

Bevorzugte Mengenverhältnisse sind:

10 - 70 Gew.-% an Komponente A
10 - 70 Gew.-% an Komponente B
10 - 70 Gew.-% an Komponente C
0,5 - 5 Gew.-% an Komponente D und
0,1 - 1 Gew.-% an Komponente E.

Die Umsetzungsprodukte gemäß Komponente A) können sowohl einheitlich als auch Gemische dieser Umsetzungsprodukte sein.

Bevorzugte Verbindungen gemäß Komponente A) sind Umsetzungsprodukte von Hydroxyalkylacrylat, besonders bevorzugt Hydroxyethylacrylat, mit dem Uretdion und/oder Triisocyanurat und/oder Biuret auf Basis Hexamethylendiisocyanat und deren Gemische und deren höhermolekulare Analoga.

Geeignete Verbindungen gemäß Komponente B) sind beispielsweise Trimethylolpropantri(meth)acrylat, Di-trimethylolpropantetra(meth)acrylat, Pentaerythrittri(meth)acrylat, Pentaerythrittetra(meth)acrylat, Dipentaerythritpenta(meth)acrylat, Dipentaerythrithexy(meth)acrylat und das Tri(meth)acrylat von alkoxyliertem Trimethylolpropan sowie Gemische dieser Verbindungen.

Geeignete Lösungsmittel bzw. Lösungsmittelsysteme gemäß Komponente C) sind solche, die Polycarbonat weder anquellen noch lösen, damit schädigen und somit spannungsrißauslösend wirken. Bevorzugte Lösungsmittel bzw. Lösungsmittelsysteme sind beispielsweise $C_5$-$C_8$-Aliphaten bzw. Cycloaliphaten, fluorierte Kohlenwasserstoffe, kombiniert fluorierte/chlorierte Kohlenwasserstoffe, $C_1$-$C_6$-aliphatische bzw. cycloaliphatische Alkohole und Lösungsmittelsysteme bestehend aus

a) 50-95 Gew.-% $C_1$-$C_6$-aliphatische Alkohole, wie z.B. Methanol, Ethanol, Propanol, i-Propanol, n-Butanol, i-Butanol und

b) 5-30 Gew.-% aiphatische Ester, wie z.B. Essigsäureethylester oder Essigsäurebutylester und

c) 0-20 Gew.-% aromatische Kohlenwassertoffe, wie z.B. Toluol oder Xylol und

d) 0-40 Gew.-% aliphatische Ketone, wie z.B. Aceton, Methylethylketon oder Methylisobutylketon und

e) 0-10 Gew.-% Diacetonalkohol, wobei sich alle Gew.-% der Einzelkomponenten auf die Gewichtssumme von 100 Gew.-% Mischung aus a), b), c), d) und e) beziehen.

Geeignete Photoinitiatoren gemäß Komponente D) sind die handelsüblichen Produkte. Bevorzugte Photoinitiatoren sind 1-Hydroxy-2-methyl-1-phenyl-propan-1-on, 1-Hydroxycyclohexyl-phenylketon, 2,4,6-Trimethylbenzoyl-diphenylphosphanoxid und 2-Methyl-1-[4-(methylthio)phenyl]-2-morpholinopropanon-1.

Als Lackadditive gemäß Kompnente E) werden literatur- und/oder im Handel bekannte oberflächenaktive Agentien wie Verlaufshilfsmittel, Entlüfter bzw. Entschäumer, bevorzugt auf Polysiloxanbasis, verstanden.

Die verschiedenartigen oberflächenaktiven Agentien einschließlich anionische, kationische und nichtionische oberflächenaktive Agentien, die im Sinne der Erfindung eingesetzt werden können, werden beschrieben in "Kirk-Othmer Encyclopedia of Chemical Technology, Vol. 19, Interscience Publishers, New York, 1969, Seite 507-593, und "Encyclopedia of Polymer Science, and Technology, Vol. 13, Interscience Publishers, New York, 1960, Seite 477-486.

Geeignete Lackadditive sind beispielsweise die handelsüblichen, wie Perenol S 6 der Firma Henkel und Cie, BYK 341 der BYK-Chemie und das Baysilon- Lackadditiv PL der Bayer AG (nicht limitierend).

Die erfindungsgemäßen Mischungen enthaltend die Komponenten A), B), C), D) und E) sollen vorzugsweise Viskositäten < 40 cps bei 25 °C besitzen. (Die Messung der Viskosität kann mit einem Brookfield-Rotationsviskosimeter durchgeführt werden).

Durch die Wahl der Mengenverhältnisse der Komponenten A), B) und C) läßt sich diese Viskosität in den gewünschten Grenzen variieren und auf die jeweils erforderlichen Verarbeitungsbedingungen einstellen.

Die erfindungsgemäßen Mischungen enthaltend die Komponenten A), B), C), D) und E) sind zur

Beschichtung von Formkörpern aus thermoplastischen Polycarbonaten geeignet.

Gegenstand der vorliegenden Erfindung ist somit auch die Verwendung der erfindungsgemäßen Mischungen zum Beschichten von Formkörpern aus thermoplastischen Polycarbonaten.

Die erfindungsgemäßen Mischungen enthaltend die Komponenten A), B), C), D) und E) werden auf die Formkörper aus thermoplastischen Polycarbonaten aufgetragen und danach mittels UV-Strahlung gehärtet.

Gegenstand der vorliegenden Erfindung ist somit auch ein Verfahren zum Beschichten von Formkörpern aus thermoplastischen Polycarbonaten, das dadurch gekennzeichnet ist, daß man die erfindungsgemäßen Mischungen enthalten die Komponenten A), B), C), D) und E) in bekannter Weise auf Formkörper aus Polycarbonat aufträgt und danach mittels UV-Strahlung in bekannter Weise härtet.

Gegenstand der vorliegenden Erfindung sind außerdem die nach dem erfindungsgemäßen Verfahren beschichteten Formkörper aus thermoplastischen Polycarbonaten.

Gegenstand der vorliegenden Erfindung sind außerdem Formkörper aus thermoplastischen Polycarbonaten beschichtet mit einer ausgehärteten Schicht der erfindungsgemäßen Mischungen enthaltend die Komponenten A), B), C), D) und E).

Polycarbonatformkörper werden aufgrund ihrer ausgezeichneten Eigenschaften, wie Transparenz, Schlagfestigkeit bzw. Stoßfestigkeit und Zugfestigkeit vielfältig verwendet. Die Eigenschaften der Oberfläche des Materials, wie ihre geringe Abrieb- und Kratzfestigkeit und die geringe Beständigkeit gegenüber Lösungsmitteln, sind jedoch für viele Einsatzgebiete ungenügend. Insbesondere neigt die Oberfläche des Materials im Kontakt mit der Außenwelt opakt zu werden. Es wurden eine Vielzahl von Methoden zur Beseitigung dieses Mangels vorgeschlagen, z.B. die Verwendung von besonderen Überzügen auf Basis von Siloxan- oder Melaminharzen. Solche Verfahren sind z.B. beschrieben in der US-P 3 707 397 oder US-P 3 843 390.

Diese Überzügen sind jedoch schwierig herzustellen und haben Nachteile, z.B. werden diese Lacke bzw. Überzüge aus Lösungsmitteln appliziert und die Vernetzung wird bei höheren Temperaturen durchgeführt, wobei diese Behandlung derart ist, daß die Eigenschaften des polymeren Substrats negativ beeinflußt werden können. Solche Systeme müssen außerdem mehrschichtig aufgebaut werden und sind so spröde, daß keine Teile damit ausgerüstet werden können, die größeren Biegebeanspruchungen ausgesetzt sind.

Ferner ist bekannt, Formteile aus Polycarbonat mit einem Überzug aus einem Poly(meth)acrylat zu versehen, z.B. durch Beschichten des Formteils mit einem Lack auf Basis Poly(meth)acrylat, wie z.B. beschrieben in WO 86/04592 oder durch Heißverpressen von Polycarbonatplatten mit (Meth)acrylatfilmen.

Durch eine derartige Beschichtung von Formteilen aus Polycarbonat kann das System zwar wetterfest ausgerüstet werden, zumal dann, wenn der auf Polycarbonat aufgebrachte Film aus Polyacrylat einen UV-Absorber enthält; durch diese Beschichtungen wird jedoch die Kratzfestigkeit praktisch nicht geändert.

UV-härtende Lacksysteme erscheinen aufgrund ihrer schnellen Aushärtung als Beschichtungssysteme für Polycarbonat besonders geeignet. Beispiele dafür sind in dem US-Patent 3 968 305 und der PCT-Anmeldung WO 80/00968 beschrieben. Beide Systeme sind jedoch einerseits mangels ausreichender Haftung und zum anderen zusätzlich wegen unbefriedigender mechanischen Eigenschaften und unbefriedigender Kratzfestigkeit nicht ideal.

Weiterhin enthalten diese Beschichtungen mono- und/oder difunktionelle Acrylate, die sehr aggressiv auf PC wirken. Deshalb sind die mechanischen Eigenschaften beschichteter Formteilte höchst unbefriedigend; das Energieaufnahmevermögen sinkt drastisch.

Gemäß EP-PS 0 020 344 bzw. WO 80/00942 werden Polyurethan-haltige Acrylate als Beschichtungen für Polycarbonate vorgesehen. Die Polyurethane enthalten jedoch keine Biuretgruppen oder Triisocyanuratgruppen oder Uretdiongruppe. Die Lacke sind bezüglich Kratzfestigkeit und Witterungsstabilität jedoch noch nicht zufriedenstellend. Entsprechendes gilt auch, wenn man die in den US-Patenten 3 297 745 und 3 673 140 beschriebenen Urethan-acrylate bzw. Alkyd-urethan-acrylate einsetzt, die in EP-OS 0 020 344, Seite 4, Zeilgen 45/46 zitiert sind.

Ein Unterschied zur EP-AS 0 020 344 besteht auch darin, daß dort auch bifunktionelle Acrylate geeignet sind mit den oben beschriebenen negativen Auswirkungen auf die beschichteten Teile. Weiterhin ist auch kein Lösungsmittelzusatz vorgesehen; spritz- bzw. tauchbare Viskositäten sind nicht zu formulieren.

Die DE-P 3 134 157 beschreibt Beschichtungszusammensetzungen, die ebenfalls keine Uretdion-, Isocyanurat- oder Biuretgruppen, wie die erfindungsgemäßen Mischungen, enthalten und im wesentlichen größere Mengen an N-Vinylderivaten geradliniger oder cyclischer sekundärer Amide verwenden. Nachteilig ist dabei die Notwendigkeit, die UV-Bestrahlung mehrmals durchführen zu müssen, um eine gute Kratzfestigkeit zu erhalten. (Siehe Beispiel 1 der DE-OS 3 134 158). Ferner kann eine niedrige Viskosität hierbei nur unter Verwendung großer Vinylpyrrolidon, erhalten werden, wodurch jedoch die Kratzfestigkeit und Lösungsmittelstabilität wie auch Witterungsstabilität wieder reduziert werden. Zudem besteht bei der Verwendung größerer Anteile N-Vinylpyrrolidon die Gefahr des Anlösens, der Eintrübung sowie Spannungsrißauslösung bei Polycarbonat, solange die Beschichtung noch nicht ausgehärtet ist (s.o.).

EP-A 0 274 593 und EP-A 0 274 596 beschreiben die Verwendung von polyfunktionellen Acrylaten als geeignetes Beschichtungsmittel. Allerdings härten diese Beschichtungen nur noch unter $N_2$ aus. Spritz- bzw. tauchbare Viskositäten sind nur unter Verwendung von difunktionellen Acrylaten unter Verlust der mechanischen Eigenschaften beschichteter Teile zu erzielen (s.o.).

Die DOS 3 819 627 beschreibt Beschichtungszusammensetzungen, die wie die erfindungsgemäßen Mischungen Uretdion-, Isocyanat- oder Biuretgruppen enthalten. Hier sind jedoch auch wieder monofunktionelle Acrylate bzw. Vinylverbindungen (z.B. n-Vinylpyrrolidon) bzw. bifunktionelle Acrylate (z.B. Hexandioldiacrylat) mit den schon oben beschriebenen verheerenden Folgen für die Mechanik damit beschichteter Formteile geeignete Komponenten. Ein wesentlicher Unterschied zur DOS 3 819 627 ergibt sich daraus, daß hier ein wesentlicher Bestandteil des beschriebenen Verfahrens der lösungsmittelfreie Auftrag der Mischungen ist. Ohne Lösungsmittel lassen sich jedoch Beschichtungen mit Viskositäten < 40 cps, die auch unter Luftsauerstoff härten, nicht formulieren (s. Vergleichsversuch VH). Härtung unter Inertgas mit erheblichen Kostennachteilen ist unumgänglich.

Dieser Erfindung lag also die Aufgabe zugrunde, eine niedrigviskose, strahlenhärtende Beschichtungskomposition zu finden, mit der es gelingt spritz- bzw. tauchbare Viskositäten zu formulieren (< 40 cps). Die Beschichtungskomposition soll auch in Gegenwart von Sauerstoff aushärten, eine kratz- und chemikalienresistente Oberfläche hoher optischer Güte liefern und das Energieaufnahmevermögen von Polycarbonat nicht beeinträchtigen.

Die Möglichkeit, die erfindungsgemäßen Mischungen mit Viskositäten < 40 cps einstellen zu können, ist für die Praxis der Polycarbonatbeschichtung deshalb sehr wichtig, da eine Beschichtung von Polycarbonatformkörpern mit unebenen Oberflächen die Applikationsmöglichkeiten von Lacken auf wenige Verfahren einschränkt, insbesondere wenn Beschichtungen hoher optischer Güte verlangt werden. Geeignete Verfahren sind beispielsweise Spritz- und Tauchverfahren bzw. Spin-coationg, die niedrige Lackviskositäten erfordern. Eine weitere Anforderung ist die Erzielung einer geringen Schichtdicke, da eine zu große Schichtdicke der kratzfesten Beschichtung zu Abplatzungen führen kann und die Haftung auf dem Substrat verschlechtert werden kann.

Erfindungsgemäß geeignete und erforderliche Schichtdicken nach Aushärtung liegen somit unterhalb 20 $\mu$m, vorzugsweise zwischen 5 und 10 $\mu$m.

Die Erzielung derart geringer, aber trotzdem effektiver Schichtdicken, was geringe Viskositäten und guten Lackverlauf verlangt, war bislang mit den üblichen Lacksystemen für thermoplastische Polycarbonate nur durch eine extreme Lackzusammensetzung, beispielsweise durch Erhöhung des Anteils an niederviskosen Acrylaten, erreichbar, wodurch jedoch negative Eigenschaften einerseits der ausgehärteten Beschichtung oder andererseits des beschichteten Polycarbonatformkörpers in Kauf genommen werden mußten.

Die aliphatischen Polyisocyanate zur Herstellung der Komponente A) der UV-härtbaren Mischungen sollen wenigstens 2 Isocyanatgruppen und wenigstens eine Uretdion- und/oder Triisocyanurat- und/oder Biuretgruppe pro Molekül enthalten. Solche Verbindungen sind nach bekannten Verfahren herstellbar, beispielsweise über eine Dimerisierung von aliphatischen Diisocyanaten unter Bildung von Uretdiongrupen, durch Trimerisierung unter Bildung von Triisocyanuratgruppen sowie durch partielle Hydrolyse über die Stufe der Carbamidsäure und/oder des Amins unter Bildung biuretverknüpfter Systeme erhältlich.

Sie können beispielsweise durch folgende Strukturformeln (1) bis (3), beschrieben werden.

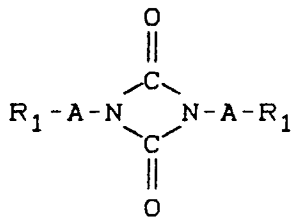

(1)

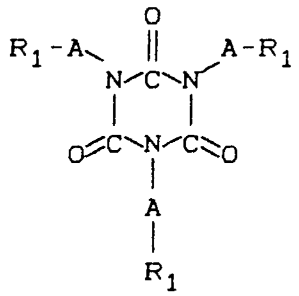

(2)

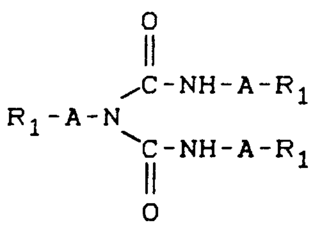

(3)

worin

R₁ ein Rest der Formel

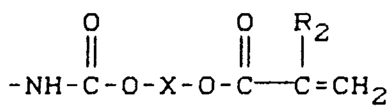

ist, wobei $-R_2$, H oder $CH_3$ und -X- Alkylen mit 2 bis 6 C-Atomen, beispielsweise Ethylen ist, und worin

A ein zweibindiger, aliphatischer Kohlenstoffrest mit 2 bis 30 C-Atomen ist, beispielsweise $-(CH_2)_4-$ oder $-(CH_2)_6-$ oder $-(CH_2)_{12}-$ sein kann.

Formel (3) enthält hierbei eine Biuretstruktur, die formal aus 3 Molen Diisocyanat, beispielsweise Hexamethylendiisocyanat, unter Zusatz von 1 Mol $H_2O$ und Abspaltung von 1 Mol $CO_2$ entstanden ist.

Zusätzlich zu den Verbindungen (1) bis (3) kann die Komponenten A) auch deren höhenmolekulare Analoga enthalten, die dann mindestens zwei der in Rede stehenden Uretdion-, Triisocyanurat- und/oder Biuretgruppen in einem Molekül enthalten. Selbstverständlich können hier wiederum Gemische dieser Verbindungen eingesetzt werden.

Bevorzugte Verbindungen der Formeln (1) bis (3) sind solche, in denen A $-(CH_2)_6-$ ist.

Produkte dieses Typs sind beispielsweise das Desmodur N 3200® und das Desmodur N 3300®, beides Handelsprodukte der Bayer AG.

Die Herstellung der Komponente A) der UV-härtbaren Mischungen kann nach bekannten Methoden aus den aliphatischen Polyisocyanaten, die wenigstens 2 Isocyanatgruppen und wenigstens eine Uretdion-, Triisocyanurat- und/oder Biuretgruppe pro Molekül enthalten, und den Hydroxyalkylacrylaten unter Verwendung von geeigneten Urethanisierungskatalysatoren erfolgen. Die Molekulargewichte der Umsetzungsprodukte gemäß Komponente A) sind im Bereich von 500 bis 3.500, wobei das Gewichtsmittel des Molekulargewichtes 800 bis 1.000 beträgt (Messung mittels Gelpermeationschromatographie, Eichung Polycarbonat).

Die Herstellung der Komponente A) kann auch gegebenenfalls in Gegenwart der anderen Komponenten B), C), E) und/oder D) erfolgen, sofern diese Komponenten keine mit Isocyanatgruppen reaktiven H-Atomen enthalten.

Die Vermischung der Komponenten A), B), C), D) und E) erfolgt nach üblichen Verfahren, z.B. bei Raumtemperatur oder leicht erhöhter Temperatur und unter Ausschluß direkter Lichteinwirkung.

Die Mischungen werden nach ihrer Herstellung vorzugsweise filtriert.

Den erfindungsgemäßen Mischungen enthaltend die Komponenten A), B), C), D) und E) können während oder nach ihrer Herstellung noch für Urethanacrylate übliche Stabilisatoren, UV-Absorber und Farbstoffe in solchen Mengen zugemischt werden, die die Photopolymerisation und Transparenz der Bechichtungen nicht beeinträchtigt.

Die Beschichtungen der Polycarbonatartikel mittels der erfindungsgemäßen Mischungen enthaltend die Komponenten A), B), C), D) und E) können nach üblichen Verfahren, beispielsweise durch Tauchen, Besprühen oder Beschleudern der Polycarbonatformkörper, erfolgen, insbesondere eignen sich Spritz- und Tauchverfahren.

Die Härtung der Beschichtungszusammensetzung wird durch UV-Strahlung ausgelöst, wozu handelsübliche UV-Strahler Verwendung finden.

Es ist ferner möglich, die beschichteten Polycarbonatformkörper vor der Härtung zu erwärmen, eventuell durch IR-Strahler, bei erhöhter Temperatur mittels UV-Strahlung zu härten oder den Formkörper nach UV-Bestrahlung bei höheren Temperaturen zu tempern, wobei in allen Fällen jedoch die Glastemperatur des Formkörpers nicht überschritten werden darf.

Formkörper aus thermoplastischen Polycarbonaten sind bekannt. Diese thermoplastischen Polycarbonate, denen als OH-gruppenhaltige Bausteine überwiegend Phenole zugrunde liegen, also Diphenole, gegebenenfalls Monophenole und gegebenenfalls mehr als zweiwertige Phenole, sind üblicherweise thermoplastische, aromatische Polycarbonate genannt. Sie, ihre Herstellung und Verwendung zur Herstellung von Formkörpern sind beispielsweise in "Chemistry and Physics of Polycarbonates", Polymer Rev. Vol.9, Interscience Publishers beschrieben. Sie können gegebenenfalls unter Zusatz bekannter Kettenabbrecher (siehe EP-A 0 010 602, DE-OS 3 143 252), Verzweiger wie Trisphenolen und/oder Isatinbiskresol(phenol) (siehe die deutschen Offenlegungsschriften 1 570 533, 1 595 762, 2 500 092), Stabilisatoren wie Phosphanen und/oder Phosphiten (siehe EP-A 0 143 906, DE-OS 2 140 207) und Entformungsmitteln (siehe die deutschen Offenlegungsschriften 2 507 748, 2 729 485 und 2 064 095) hergestellt werden. Ferner können die Polycarbonate UV-Absorber enthalten.

Die Herstellung der Formkörper aus den thermoplastischen Polycarbonaten erfolgt beispielsweise durch Extrusion oder Spritzguß. Falls man Folien herstellen will, kann dies auch nach dem Gießverfahren erfolgen.

Beispiele für Formkörper aus den thermoplastischen Polycarbonaten, die erfindungsgemäß beschichtet werden können, sind Gebrauchsgegenstände aller Art, Elektroartikel, Abdeckplatten, Sichtblenden, Sicherheitsscheiben, Massivplatten und Hohlkammerplatten.

Die Verwedung dieser beschichteten Polyarbonatformkörper kann im Gebrauchsgüterbereich erfolgen, wo die Gefahr des Abriebs und der Bildung von Kratzern besonders groß ist, beispielsweise für Lampenabdeckungen.

## Beispiele

Die in den folgenden Beispielen beschriebenen Beschichtungskompositionen wurden auf Platten aus Bisphenol A-Homopolycarbonat mit den Maßen 105 x 150 x 3 mm mittels eines Spin-coaters appliziert. Die Drehgeschwindigkeit wurde so variiert, daß die Schichtdicke nach der Härtung zwischen 5-10 $\mu$m betrug. Die Härtung erfolgte mittels einer UV-Bestrahlungsanlage der Firma IST, Typ 200-11-1-Tr.

Zur Ermittlung der Kratzfestigkeit wurde die Trübungszunahme nach Berieselung der Probe mit Quarzsand entsprechend dem Sandrieselverfahren (DIN 52 348 E) gemessen.

Zur Beurteilung der Haftung der Beschichtung und deren Witterungsstabilität wurde eine Gitterschnittprüfung durch Einritzen eines Rasters von 6x6 Linien mit einem Abstand von jeweils 1 mm in die Beschichtung mit anschließendem Aufdrücken sowie schnellem Abziehen eines Klebebandes durchgeführt. Die Einteilung in Gt 0 bis Gt 5 erfolgte danach entsprechend der Maßgabe der DIN 53 151.

Zur Ermittlung der Zähigkeit der lackierten Teile wurde in Anlehnung an DIN 53 443 ein modifizierter Kugelfallversuch durchgeführt, wobei ein Fallkörper von 3 kg Masse mit einem Kugeldurchmesser von 19 mm aus einer Fallhöhe von 10 cm bis max. 100 cm auf die lackierten PC-Platten schlägt. Die PC-Platten liegen auf einem Auflagering von 28 mm Innendurchmesser frei auf. Als Belastungsgrenze wird die Fallhöhe angegeben bei der im PC die ersten Risse auftreten.

Die Beschichtungskompositionen B, E, G, 1, 2, 3, 4 enthalten ein Lösungsmittelsystem (Komponente L1) bestehend auf 20 Teilen Ethanol, 20 Teilen Isopropanol, 20 Teilen Propanol und 40 Teilen Ethylacetat.

Die Beschichtungskompositionen 5-10 enthalten ein Lösungsmittelsystem (Komponente L2) bestehend aus 20 Teilen Ethylacetat, 8 Teilen i-Butanol, 35 Teilen i-Propanol und 30 Teilen Ethanol.

Bei den Beschichtungskompositionen VB, VF, 1, 3, 7 wurden 0,3 Gew.-% des Lackadditivs Perenol S6 der Firma Henkel und CIE, bei Beschichtungskompositionen VE, VI, 2,4,5-10 0,3 Gew.-% des Lackadditivs BYK 341 der BYK-Chemie verwendet.

Als Photoinitiator wurde bei den Beschichtungskompositionen VB, VD, VE, VF, VG, VH, 1-10 2-Hydroxy-2-methyl-1-phenylpropan-1-on in Mengen von 3 Gew.-% verwendet.

Als Vergleichsbeispiel VC wurde das Beispiel 1 der EP-A 0 274 596 gewählt. Als Photointiator verwendete man 5 Teile 2,2-Dimethoxy-2-phenylacetophenon. Zusätzlich enthält das Vergleichsbeispiel VC noch 5 Teile 2-(2'-Hydroxy-5'-tert.-octylphenyl)-benzotriazol.

Als Vergleichsbeispiele VH und VI wurden Beschichtungskompositionen gemäß DOS 3 819 627 gewählt.

Das Vergleichsbeispiel VA ist reines Bisphenol A-Homopolycarbonat, unbeschichtet.

Mischung M1 wurde wie folgt hergestellt:

Mischung M1

In einem 2 l-Rundhalskolben, der mit Rührer, Innenthermometer und Gaseinleitungsrohr versehen ist, wurden

305 g Hydroxyethylacrylat
0,25 g Di-tert.-butylhydrochinon
0,125 g Di-butyl-zinndilaurat

vorgelegt.

Bei 40-45°C und unter Durchleiten von trockener Luft wurden anschließend 450 g eines Polyisocyanats auf Basis Hexamethylendiisocyanat, das als Hauptkomponente das Biuret aus drei Molekülen Hexamethylendiisocyanat enthält und einen NCO-Gehalt von ca 23 % besitzt, zugetropft und die Reaktionsmischung nach Zutropfende auf 60-65°C solange erhitzt, bis die NCO-Zahl unter 0,1 % abgesunken war, was im allgemeinen nach 12 Stunden der Fall war.

Mischung M2 wurde wie folgt hergestellt:

Mischung M2

In einem 2 l-Rundhalskolben, der mit Rührer, Innenthermometer und Gaseinleitungsrohr versehen ist, wurden

302 g Hydroxyethylacarylat
0,25 g Di-tert.-butylhydrochinon
0,125 g Di-butyl-zinndilaurat

vorgelegt.

Bei 40-45°C und unter Durchleiten von trockener Luft wurden anschließend 488 g eines Polyisocyanats auf Basis Hexamethylendiisocyanat, das als Hauptkomponente das Triisocyanurat von Hexamethylendiisocyanat enthält und einen NCO-Gehalt von ca. 21,5 % besitz, zugetropft und die Reaktionsmischung nach Zutropfende auf 60-65°C solange erhitzt, bis die NCO-Zahl unter 0,1 % abgesunken war, was im allgemeinen nach 12 Stunden der Fall war.

Folgende Beschichtungszusammensetzung wurden hergestellt:

| Vgl. bsp. | M2 | M1 | PETrA | PETeA | DTMPTeA | TMP | HA | NVP | Kompl.L1 |
|---|---|---|---|---|---|---|---|---|---|
| VB | | 12 | 12 | | | | 6 | | 70 |
| VC | | | | | | 50 | 50 | | |
| VD | | | | | | 50 | 50 | | |
| VE | | 12 | 12 | | | | | 6 | 70 |
| Bsp. | | | | | | | | | |
| 1 | | 15 | 15 | | | | | | 70 |
| 2 | | 27 | | | 3 | | | | 70 |
| 3 | | 9 | | 21 | | | | | 70 |

| Vgl. bsp. | M2 | M1 | PETrA | PETeA | DTMPTeA | TMP | HA | NVP | Komponente L1 | L2 |
|---|---|---|---|---|---|---|---|---|---|---|
| VF | | 50 | 50 | | | | | | | |
| VG | | 12 | 12 | | | | 6 | | 70 | |
| VH | | 20 | | | | | 60 | 6 | | |
| VI | | 20 | | | | 60 | | 6 | | |
| Bsp. | | | | | | | | | | |
| 4 | | 25 | 25 | | | | | | 50 | |
| 5 | | 25 | 25 | | | | | | | 70 |
| 6 | | 25 | 25 | | | | | | | 50 |
| 7 | | 25 | | | 25 | | | | | 50 |
| 8 | | 10 | | | 40 | | | | | 50 |
| 9 | | 30 | | 20 | | | | | | 50 |
| 10 | 25 | | 25 | | | | | | | 50 |

M2 = Mischung M2
M1 = Mischung M1
PETrA = Pentaerythrittriacrylat
PETeA = Pentaerythrittetraacrylat
TMP = Trimethylolpropan-trisacrylat
HA = Hexandioldiacrylat
NVP = N-Vinylpyrrolidon
DTMPTeA = Ditrimethylolpropantetraacrylat
Komponente L1, L2 = Lösungsmittelgemische (s.o.)

| Vgl. Bsp. | Trübungs-zunahme ($cd/m^2$ lux) | Haftung | Bruchtest max. Fall-höhe in cm | Viskosität (cps) | visuelle Beurtlg. d. Lacksch. |
|---|---|---|---|---|---|
| VA | 38.5 | Gt 0 | 100 | | |
| VB | 2.1 | Gt 0 | 30 | 1.9 | + |
| VC | 3.2 | Gt 0 | 10 | 15.5 | +*) |
| VD | 2.4 | Gt 0 | 10 | 13.4 | + |
| VE | 2.6 | Gt 0 | 30 | 2.4 | + |
| Bsp. | | | | | |
| 1 | 1.5 | Gt 0 | 100 | 2.4 | ++ |
| 2 | 2.2 | Gt 0 | 100 | 3.8 | ++ |
| 3 | 2.0 | Gt 0 | 100 | 2.2 | ++ |
| Vgl. bsp. | | | | | |
| VF | 1.9 | Gt 0 | 100 | 1250 | - |
| VG | 2.2 | Gt 0 | 30 | 1.9 | o |
| VH | 2.1 | Gt 0 | 10 | 30.2 | +*) |
| VI | 2.0 | Gt 0 | 10 | 130 | + |
| Bsp. | | | | | |
| 4 | 1.6 | Gt 0 | 100 | 9.8 | ++ |
| 5 | 1.4 | Gt 0 | 100 | 2.5 | ++ |
| 6 | 1.3 | Gt 0 | 100 | 9.7 | ++ |
| 7 | 1.2 | Gt 0 | 100 | 9.4 | ++ |
| 8 | 1.6 | Gt 0 | 100 | 9.6 | ++ |
| 9 | 1.1 | Gt 0 | 100 | 9.7 | + |
| 10 | 1.7 | Gt 0 | 100 | 9.5 | ++ |

visuelle Beurteilung:
++ sehr glatte Oberfläche, störungsfrei
\+ glatte Oberfläche, störungsfrei
o glatte Oberfläche, vereinzelte Störungen
\- wellige Oberfläche mit Störungen (Krater, Apfelsinenhaut)
*) Härtung unter $N_2$-Atmosphäre (unter Luft erfolgt keine Härtung)

## Patentansprüche

**1.** UV-härtbare Mischungen, dadurch gekennzeichnet, daß sie

A) 5-90 Gew.-%, bezogen auf die Gewichtssumme von 100 Gew.-% aus A( + B) + C) an Umsetzungsprodukt von Hydroxyalkylacrylaten mit aliphatischen Polyisocyanaten, die wenigstens 2 Isocyanatgruppen und wenigstens eine Uretdion- und/oder Triisocyanat-und/oder Biuretgruppe pro Molekül enthalten,

B) 5-90 Gew.-%, bezogen auf die Gewichtssumme von 100 Gew.-% A) + B) + C) an tri- oder tetra- oder penta- oder hexafunkitonelle (Meth)acrylaten mit einem Molekulargewicht unter 600,

C) 5-90 Gew.-%, bezogen auf die Gewichtssumme von 100 Gew.-% aus A) + B) + C) eines Lösungsmittels bzw. eines geeigneten Gemisches, gängiger Lösungsmittel,

D) 0,1-10 Gew,-%, bezogen auf die Gewichtssumme von 100 Gew.-% A) + B) + C), Photoinitiatoren und

E) 0,01-3 Gew.-%, bezogen auf die Gewichtssumme von 100 Gew.-% A) + B) + C), Lackadditive

enthalten.

**2.** UV-härtbare Mischungen gemäß Anspruch 1, dadurch gekennzeichnet, daß sie

a) 10 - 70 Gew.-% an Komponente A

b) 10 - 70 Gew.-% an Komponente B

c) 10 - 70 Gew.-% an Komponente C

d) 0,5- 5 Gew.-% an Komponente D und

e) 0,1- 1 Gew.-% an Komponente E

enthalten.

**3.** Verwendung der Mischungen der Ansprüche 1 und 2 zum Beschichten von Formkörpern aus thermoplastischen Polycarbonaten.

**4.** Verfahren zum Beschichten von Formkörpern aus thermoplastischen Polycarbonaten, dadurch gekennzeichnet, daß man die Mischungen der Ansprüche 1 und 2 in bekannter Weise auf Formkörper aus Polycarbonat aufträgt und danach mittels UV-Strahlung in bekannter Weise härtet.

**5.** Beschichtete Polycarbonatformkörper, erhältlich nach dem Verfahren des Anspruchs 4.

**6.** Formkörper aus thermoplastischen Polycarbonaten beschichtet mit einer ausgehärteten Schicht der Mischungen der Ansprüche 1 und 2.

Europäisches Patentamt

# EUROPÄISCHER RECHERCHENBERICHT

Nummer der Anmeldung

**EP 91 11 0139**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 110 540 (LOCTITE CORPORATION)<br>* das ganze Dokument *<br>– – – | 1-6 | C 09 D 4/00<br>C 08 J 7/04 |
| A | EP-A-0 347 610 (BAYER)<br>* Patentansprüche *<br>– – – | 1-6 | |
| A | EP-A-0 126 359 (BAYER)<br>* Patentansprüche *<br>– – – – – | 1-6 | |

| RECHERCHIERTE SACHGEBIETE (Int. Cl.5) |
|---|
| C 09 D<br>C 08 J |

Der vorliegende Recherchenbericht wurde für alle Patentansprüche erstellt

| Recherchenort | Abschlußdatum der Recherche | Prüfer |
|---|---|---|
| Den Haag | 15 Oktober 91 | ANDRIOLLO G.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument